# EUROPEAN PATENT APPLICATION

(11) **EP 4 261 316 A1**
(43) Date of publication of application: **18.10.2023**
(21) Application number: 21903871.8
(22) Date of filing: 09.12.2021
(51) Int. Cl.: C22C 38/38, C22C 38/34, C25D 7/06, C25D 5/36, C25D 5/50, C25D 3/20, C23C 28/02, C23C 2/06

(54) **HIGH-STRENGTH HOT-DIP GALVANIZED STEEL SHEET HAVING EXCELLENT PLATING QUALITY, STEEL SHEET FOR PLATING, AND METHODS FOR MANUFACTURING SAME**

(30) Priority: 13.12.2020 KR 20200173908
(71) Applicant: POSCO Co., Ltd, Pohang-si, Gyeongsangbuk-do 37859 (KR)
(72) Inventor: JUNG, Jin-Ho, Gwangyang-si, Jeollanam-do 57807 (KR); LEE, Won-Hwi, Gwangyang-si, Jeollanam-do 57807 (KR); KANG, Ki-Cheol, Gwangyang-si, Jeollanam-do 57807 (KR); KWON, Seong-Choon, Gwangyang-si, Jeollanam-do 57807 (KR)
(74) Representative: Meissner Bolte Partnerschaft mbB
(86) International application number: PCT/KR2021/018661
(87) International publication number: WO 2022/124825

(57) **Abstract**

The present invention relates to a high-strength hot-dip galvanized steel sheet having excellent plating quality, a steel sheet for plating for manufacturing same, and methods for manufacturing the steel sheets. The steel sheet for plating according to an aspect of the present invention has a GDS profile of an Mn component, as observed in the depth direction from the surface, sequentially including a maximum point and a minimum point, wherein a difference (a converted concentration difference of Mn) between a value, obtained by dividing the concentration of Mn at the maximum point by the concentration of Mn of a base material, and a value, obtained by dividing the concentration of Mn at the minimum point by the concentration of Mn of the base material, may be 80% or more, and a difference (a converted concentration difference of Si) between a value, obtained by dividing the concentration of Si at the maximum point by the concentration of Si of the base material, and a value, obtained by dividing the concentration of Si at the minimum point by the concentration of Si of the base material, may be 50% or more. However, when no minimum point appears within a depth of 5 pm, a point at a depth of 5 µm is denoted as the point at which the minimum point appears.

## Description

### Technical Field

The present disclosure relates to a high-strength hot-dip galvanized steel sheet having excellent plating quality, a steel sheet for plating for manufacturing the same, and a manufacturing method thereof.

### Background Art

In recent years, in the automobile industry, by applying high-strength steel sheets as steel materials for automobiles, safety has been improved and weight reduction due to thickness reduction has been obtained. Precipitation hardened steel, solid solution hardened steel, etc. have been developed as steel materials that may be preferably applied as steel for automobiles, and further, Dual Phase Steel (DP steel), Complex Phase Steel (CP steel), Transformation Induced Plasticity Steel (TRIP steel), Twinning Induced Plasticity Steel (TWIP steel) and the like using phase transformation to improve strength and elongation at the same time have been developed. These high-strength steels contain a variety of alloying elements compared to general steel, and in particular, a lot of elements such as Mn, Si, Al, Cr, B and the like, with a higher oxidation tendency than Fe, may be added.

In hot-dip galvanizing, the plating quality is determined by the surface condition of the annealed steel sheet immediately before plating is performed. Plating properties deteriorate due to the formation of surface oxides during annealing caused by elements such as Mn, Si, Al, Cr, B and the like added to secure physical properties of the steel sheet. That is, during the annealing process, the elements diffuse towards the surface and react with a small amount of oxygen or water vapor present in the annealing furnace to form single or complex oxides of the elements on the surface of the steel sheet, thereby reducing the reactivity of the surface. The surface of the annealed steel sheet with low reactivity interferes with the wettability of the hot-dip galvanizing bath, causing non-plating in which the plating metal is not attached locally or entirely to the surface of the plated steel sheet. Also, due to these oxides, the formation of an alloying suppression layer (Fe₂Al₅) required to secure the adhesion of the plating layer is insufficient during the hot-dip plating process, and the plating quality of the plated steel sheet may thus be greatly deteriorated, such as peeling of the plating layer or the like.

Various technologies have been proposed to improve the plating quality of high-strength hot-dip galvanized steel sheets. Thereamong, Patent Document 1 proposes a technique of providing a hot-dip galvanized or alloyed hot-dip galvanized steel sheet with excellent plating quality by controlling the air-fuel ratio of air and fuel to 0.80 to 0.95 in the annealing process, oxidizing the steel sheet in a direct flame furnace in an oxidizing atmosphere to form iron oxide including Si, Mn or Al alone or complex oxides to a certain depth inside the steel sheet, and then conducting hot-dip galvanizing after reduction annealing of iron oxide in a reducing atmosphere.

When using the method of reduction after oxidation in the annealing process as in Patent Document 1, components having a high affinity for oxygen, such as Si, Mn, Al and the like, are internally oxidized at a certain depth from the surface layer of the steel sheet, such that diffusion thereof to the surface layer is suppressed, and Si, Mn, or Al alone or composite oxides are relatively reduced on the surface layer, and thus wettability with zinc is improved, to reduce non-plating. However, in the case of steel with added Si, during the reduction process, Si is concentrated directly under the iron oxide to form a band-shaped Si oxide, and as a result, peeling occurs in the surface layer including the plating layer, that is, peeling occurs at the interface between the reduced iron and the base iron therebelow, and thus there is a problem that it is difficult to secure the adhesion of the plating layer.

On the other hand, as another method for improving the plating properties of high-strength hot-dip galvanized steel sheets, Patent Document 2 proposes a method of improving plating properties by maintaining the high dew point in the annealing furnace to internally oxidize alloy components such as Mn, Si, Al and the like which are easy to oxidize inside the steel and thus reducing externally oxidized oxides on the surface of a steel sheet after annealing. However, the method according to Patent Document 2 may solve the plating problem due to external oxidation of Si, which is easily internally oxidized, but there is a problem in which the effect is insignificant when a large amount of Mn, which is relatively difficult to internally oxidize, is added.

In addition, even if the plating property is improved by internal oxidation, linear non-plating may occur due to surface oxides formed unevenly on the surface, or when a hot-dip galvanized steel sheet (GA steel sheet) is manufactured through alloying heat treatment after plating, a problem such as occurrence of linear defects or the like may occur due to non-uniform alloying on the surface of hot-dip galvanized steel sheet.

As further conventional art, there is provided a method of suppressing diffusion of alloying elements to the surface during annealing by performing pre-plating of Ni before annealing. However, this method is also effective in suppressing the diffusion of Mn, but has a problem in that it does not sufficiently suppress the diffusion of Si.

### [Prior art literature]

### [Patent Literature]

(Patent Document 1) Korean Patent Application Publication No. 2010-0030627
(Patent Document 2) Korean Patent Application Publication No. 2009-0006881

### Summary of Invention

### Technical Problem

An aspect of the present disclosure is to provide a hot-dip galvanized steel sheet having excellent plating quality and a method of manufacturing the same, in which unplating does not occur and the problem of peeling of a plating layer is solved.

An aspect of the present disclosure is to provide a hot-dip galvanized steel sheet and a manufacturing method thereof, in which an alloyed hot-dip galvanized steel sheet having excellent surface quality may be manufactured without occurrence of linear defects even when alloying heat treatment is performed after plating.

An aspect of the present disclosure is to provide a steel sheet for plating and a manufacturing method thereof, in which a hot-dip galvanized steel sheet having excellent coating quality may be produced.

The object of the present disclosure is not limited to the above. Those skilled in the art to which the present disclosure pertains will have no difficulty in understanding the additional tasks of the present disclosure from the overall details of the present disclosure specification.

### Solution to Problem

According to an aspect of the present disclosure, a steel sheet for plating is characterized in that GDS profiles of an Mn element and an Si element observed from a surface in a depth direction sequentially include a maximum point and a minimum point, respectively, a difference between a value obtained by dividing an Mn concentration at the maximum point of the GDS profile of the Mn element by an Mn concentration of a base material and a value obtained by dividing an Mn concentration at a minimum point of the GDS profile of the Mn element by the Mn concentration of the base material (a difference of converged concentration of Mn) is 80% or more, and a difference between a value obtained by dividing an Si concentration at the maximum point of the GDS profile of the Si element by an Si concentration of a base material and a value obtained by dividing an Si concentration at the minimum point of the GDS profile of the Si element by the Si concentration of the base material (a difference of converged concentration of Si) is 50% or more.

However, when the minimum point does not appear within 5µm depth, a 5µm depth point is a point where the minimum point appears.

According to another aspect of the present disclosure, a hot-dip galvanized steel sheet includes the steel sheet for plating described above, and a hot-dip galvanized layer formed on the steel sheet for plating.

According to another aspect of the present disclosure, a method of manufacturing a steel sheet for plating includes preparing a base iron; forming an Fe plating layer containing 5 to 50% by weight of oxygen by performing electroplating on the base iron; and annealing the base iron on which the Fe plating layer is formed by being maintained at 600 to 950°C for 5 to 120 seconds in an annealing furnace with a 1 to 70% H₂-residual N₂ gas atmosphere controlled at a dew point temperature of -15 to +30°C.

According to another aspect of the present disclosure, a method of manufacturing a hot-dip galvanized steel sheet includes preparing a base iron; forming an Fe plating layer containing 5 to 50% by weight of oxygen by performing electroplating on the base iron; obtaining a steel sheet for plating by annealing by holding at 600 to 950°C for 5 to 120 seconds in an annealing furnace with 1-70% H₂-remaining N₂ gas atmosphere controlled at dew point temperature of -15 to +30°C for the base iron on which the Fe plating layer is formed; and dipping the steel sheet for plating in a galvanizing bath consisting of Al: 0.1 to 0.3%, a zinc plating bath consisting of Al: 0.1 to 0.3%, balance Zn and unavoidable impurities and maintained in the temperature range of 440 to 500 °C.

### Advantageous Effects of Invention

As described above, according to the present disclosure, a hot-dip galvanized steel sheet in which the phenomenon of non-plating during hot-dip galvanizing is significantly improved and plating adhesion is improved by forming a pre-plating layer and controlling the concentration profile of Mn and Si elements inside may be provided.

In addition, according to one aspect of the present disclosure, even when the hot-dip galvanized steel sheet of the present disclosure is subjected to alloying heat treatment, linear defects on the surface of the obtained hot-dip galvanized steel sheet may be prevented, thereby providing an alloyed hot-dip galvanized steel sheet having excellent surface quality.

### Brief Description of Drawings

FIG. 1 is a schematic diagram of a GDS profile measured after removing the plating layer of a hot-dip galvanized steel sheet made of Fe electroplated cold-rolled steel sheet.
FIG. 2 is a cross-sectional electron microscope photograph of a steel sheet annealed for 53 seconds at a dew point of +5°C and a temperature of 800°C, in which (a) is a cross section of a steel sheet obtained by annealing without forming an Fe plating layer, and (b) illustrates a cross section of a steel sheet obtained by Fe electroplating and annealing so that the iron weight is 1.99 g/m2.
FIG. 3 is a schematic diagram of a process of annealing the base iron in which the Fe plating layer containing oxygen is formed in an atmosphere with a high dew point.
FIG. 4 is a GDS concentration profile measured after removing the plating layer of the hot-dip galvanized steel sheet, in which (a) relates to the iron base of Comparative Example 2, (b) relates to the iron base of Comparative Example 11, and (c) relates to the iron base of Comparative Example 16, and (d) relates to the iron base of Inventive Example 7.

### Best Mode for Invention

Hereinafter, a high-strength hot-dip galvanized steel sheet having excellent coating quality according to an aspect of the present disclosure completed through research by the present inventor will be described in detail. It should be noted that when the concentration of each element is expressed in the present disclosure, it means weight% unless otherwise specified. In addition, the Fe electroplating amount is a coating amount measured by the total amount of Fe included in the plating layer per unit area, and oxygen and unavoidable impurities in the plating layer are not included in the plating amount.

In addition, unless otherwise defined, the concentration and concentration profile referred to in the present disclosure means the concentration and concentration profile measured using GDS, that is, a glow discharge optical emission spectrometer.

Hereinafter, the present disclosure will be described in detail.

The cause of deterioration of unplating and plating adhesion in steel sheets containing a large amount of Mn and Si is attributed to surface oxides generated by oxidation of alloy elements such as Mn and Si on the surface during annealing of cold-rolled steel sheets at high temperature.

It is a method of forming an oxide layer containing a large amount of oxygen in order to suppress the diffusion of alloy elements such as Mn and Si to the surface. An oxidation-reduction method in which oxidation is performed during temperature rise and then maintained in a reducing atmosphere for reduction, or an iron oxide is formed on the surface of a base metal. A method of coating and heat-treating may be used. However, the iron oxide firmly formed on the surface of the base metal is a mixture of not only FeO but also Fe3O4 and Fe2O3, which are difficult to reduce. Since reduction is slow, it is difficult to reduce completely, and since Mn and Si oxides accumulate at the interface to form a continuous oxide layer, although wettability with molten zinc is improved, the oxide layer may be easily crumbled and the plating layer may be peeled off.

On the other hand, in the case of applying an internal oxidation method at annealing in which alloy elements such as Mn and Si are oxidized inside the steel by increasing the oxygen partial pressure or dew point in the annealing furnace during the heat treatment process, Mn and Si oxides are preferentially formed on the steel surface during the heat treatment process. Then, Mn and Si are oxidized by oxygen diffused into the steel, suppressing surface diffusion. Therefore, a thin oxide film is formed on the surface of the base iron, but if the surface of the cold-rolled steel sheet before annealing is not completely homogeneous, or if local deviations such as oxygen partial pressure and temperature occur, non-plating occurs due to non-uniform wettability during hot dip galvanizing., In the process of alloying heat treatment after zinc plating, when the thickness of the oxide film is non-uniform and the difference in alloying degree occurs, it tends to cause linear defects that may be easily identified with the naked eye.

In order to solve the problems of the above technique, the present inventors tried to manufacture a hot-dip galvanized steel sheet with a beautiful surface and no plating peeling problem by controlling the presence of Mn and Si, which are oxidizing elements, on the surface of the steel sheet for plating as follows.

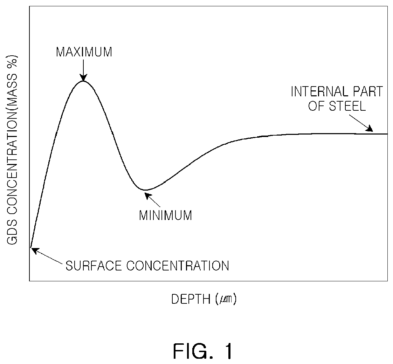

That is, the steel sheet according to one embodiment of the present disclosure may have the following characteristics in the GDS concentration profile of Mn and Si. The steel sheet for plating of the present disclosure will be described in detail with reference to the GDS profile of FIG. 1.

FIG. 1 is a graph schematically illustrating a typical GDS profile of a Mn element or Si element that may appear from a surface portion after removing a galvanized layer from a hot-dip galvanized steel sheet including the steel sheet of the present disclosure. In the graph, the vertical axis represents the concentration of alloy elements such as Mn and Si, and the horizontal axis represents the depth. As illustrated in the graph of FIG. 1, in the steel sheet for plating of the present disclosure, when the concentration profile of the Mn or Si element is directed from the surface (the interface with the plating layer in the case of hot-dip galvanization) to the inside, it may have a form in which a maximum point and a minimum point appear sequentially. Here, having it sequentially does not necessarily mean that the maximum point appears first in the depth direction from the surface (interface). However, in some embodiments, the minimum point may not appear after the maximum point, and in this case, the internal concentration of the 5 um depth region may be used as the minimum point concentration. In addition, the alloying element concentration on the surface has a value lower than that of the maximum point, but in some cases, a minimum point with a low alloying element concentration may appear between the surface and the maximum point.

In the GDS concentration profile illustrated in FIG. 1, although not necessarily limited thereto, the surface layer corresponds to a Fe plating layer having a low concentration of alloying elements because alloying elements do not diffuse much from the base iron, the maximum point corresponds to a region where internal oxides of alloy elements formed near the interface between the Fe plating layer and the base iron are concentrated, the minimum point appearing on the base iron side of the Fe plating layer is the Fe plating layer that does not contain alloying elements, and the alloying element is diffused and diluted, or the maximum point where internal oxidation has occurred corresponds to the area where the alloying element is diffused and depleted.

In one embodiment of the present disclosure, the maximum point may be formed at a depth of 0.05 to 1.0 µm from the surface of the steel sheet. If a maximum point appears in a region deeper than this, it may not be determined to be a maximum point due to the effect of the present disclosure. In addition, the minimum point may be formed at a position within a depth of 5 µm from the surface of the steel sheet. As described above, if a local minimum is not formed at a point within a depth of 5 pm, a depth of 5 µm may be used as a point where a local minimum is formed. Since the concentration at a depth of 5 µm is substantially equal to the concentration inside the base material, it may be seen as the point at which the concentration no longer decreases.

At this time, in the Mn concentration profile and the Si concentration profile, the greater the difference between the converted concentration of the element at the maximum point (the value obtained by dividing the concentration at the corresponding point by the concentration of the base material, expressed in %) and the reduced concentration at the minimum point, the more Mn diffuses to the surface, and Si. In one embodiment of the present disclosure, in the case of Mn, the maximum point conversion concentration value - the minimum point conversion concentration value may be 80% or more, and the difference between the values in the case of Si may be 50% or more. Si is an element more oxidizable than Mn, and since it easily causes internal oxidation even inside the base iron having a low oxygen concentration, oxidation may occur in a wider area than Mn. Therefore, even if the difference between the maximum and minimum concentrations of Si is smaller than that of Mn, the degree of internal oxidation cannot be said to be small. As a result of experiments conducted by the present inventors under various conditions, it was possible to obtain a hot-dip galvanized steel sheet having good coating adhesion without occurrence of non-plating during hot-dip galvanizing when the above conditions are satisfied. However, if the difference between the maximum and minimum concentrations of Mn is less than 80%, or the difference between the maximum and minimum concentrations of Si is less than 50%, there is a problem of point or linear non-plating or plating peeling. There may be. That is, by doing this, it is possible to prevent the formation of oxides of Mn and Si on the surface, so that an ultra-high-strength hot-dip galvanized steel sheet with a beautiful surface and good plating adhesion may be manufactured. The occurrence of defects such as linear defects may be suppressed. Since the difference between the converted concentration values is more advantageous, there is no need to set an upper limit on the value. However, when considering the content of the elements included, the difference in the converted concentration value may be set to 400% or less in the case of Mn and 250% or less in the case of Si. In another embodiment of the present disclosure, the difference of converted concentration of Mn may be 90% or more or 100% or more, and the difference of converted concentration of Si may be 60% or more or 70% or more.

Hereinafter, the GDS analysis method performed in the present disclosure will be described in detail.

For GDS concentration analysis, the hot-dip galvanized steel sheet is sheared to a size of 30 to 50 mm in length, and immersed in a 5 to 10% by weight aqueous hydrochloric acid solution at room temperature of 20 to 25°C to remove the galvanized layer. In order to prevent damage to the surface of the base iron during the process of dissolving the galvanized layer, when the generation of bubbles due to the reaction between the galvanized layer and the acid solution stopped, the acid solution was removed within 10 seconds, and the base iron was washed with pure water and dried. Of course, if it is a steel sheet for plating that has not yet been hot-dip galvanized, it may be analyzed without such a coating layer removal operation.

The GDS concentration profile measures the concentrations of all components contained in the steel sheet every 1 to 5 nm in the thickness direction of the steel sheet. The measured GDS profile may contain irregular noise, and a Gaussian filter with a cutoff value of 100 nm was applied to the measured concentration profile to calculate the maximum and minimum points of the Mn and Si concentrations to obtain an average concentration profile, and the noise was removed. The concentration value and depth of the maximum and minimum concentration points were obtained from the profile, respectively. In addition, it should be noted that the maximum and minimum points mentioned in the present disclosure were calculated as maximum and minimum points only when there was a positional difference of 10 nm or more from each other in the depth direction.

A steel sheet for plating that is targeted in the present disclosure may include a base iron and an Fe plating layer formed on the base iron. The composition of the iron base is not particularly limited.

However, in the case of a high-strength steel sheet containing 1.0 to 8.0% by weight of Mn and 0.3 to 3.0% by weight of Si to easily generate oxides on the surface, the present disclosure may advantageously improve plating properties. The upper limit of the concentration of Mn in the base iron is not particularly limited, but considering the commonly used composition, the upper limit may be limited to 8% by weight. In addition, the lower limit of the concentration of Mn is not particularly limited, but the composition containing less than 1.0% by weight of Mn has an aesthetically pleasing surface quality of the hot-dip galvanized steel sheet even if the Fe plating layer is not formed, so Fe electroplating is not required. The upper limit of the Si concentration is not particularly limited, but considering the commonly used composition, the upper limit may be limited to 3.0% by weight or less, and when the Si concentration is less than 0.3% by weight, even if Fe electroplating and annealing internal oxidation are not performed simultaneously Since the hot-dip galvanizing quality is beautiful, there is no need to carry out the method of the present disclosure.

Since Mn and Si are elements that affect plating properties, their concentrations may be limited as described above, but the present disclosure does not particularly limit the other components of the base iron.

However, in consideration of the fact that non-plating and plating adhesion may be severely deteriorated in the case of a high-strength steel sheet containing a large amount of alloy elements, in one embodiment of the present disclosure, the composition of the base iron in weight%, Mn: 1.0 ∼ 8.0 %, Si: 0.3 to 3.0% C: 0.05 to 0.3%, Al: 0.005 to 3.0%, P: 0.04% or less (excluding 0%), S: 0.015% or less (excluding 0%), Cr: 1.5% or less (including 0%), B: 0.005% or less (including 0%), the remainder being Fe and unavoidable impurities. Here, the term "high strength" is used to include all cases in which high strength may be obtained by heat treatment in a subsequent process as well as cases in which high strength is obtained after annealing. In addition, in the present disclosure, high strength may mean 490 MPa or more based on tensile strength, but is not limited thereto. In addition to the above-mentioned elements, the base iron may further include elements such as Ti, Mo, and Nb in a total amount of 1.0% or less. The base iron is not particularly limited, but in one embodiment of the present disclosure, a cold-rolled steel sheet or a hot-rolled steel sheet may be used as the base iron.

In one aspect of the present disclosure, a hot-dip galvanized steel sheet including the steel sheet for plating may be provided, and the hot-dip galvanized steel sheet may include a steel sheet for plating and a hot-dip galvanized layer formed on a surface of the steel sheet for plating. At this time, as the hot-dip galvanized steel sheet, any commercially available sheet may be applied, and the type thereof is not particularly limited.

Next, one exemplary embodiment of a method of manufacturing a steel sheet for plating and a hot-dip galvanized steel sheet having the above-described advantageous effects will be described. According to one embodiment of the present disclosure, the steel sheet for plating may be manufactured by a process including the steps of preparing a base iron; forming an Fe plating layer containing 5 to 50% by weight of oxygen by performing electroplating on the base iron; obtaining a steel sheet for plating by annealing the base iron on which the Fe plating layer is formed.

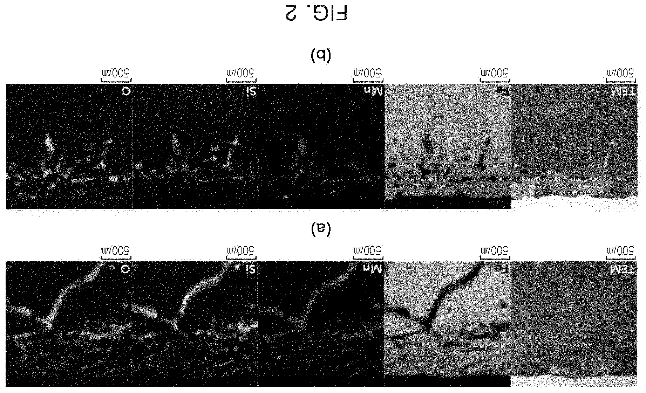

In FIG. 2, a 1.2 GPa class cold-rolled steel sheet containing 2.6% Mn, 1.0% Si, and other alloying elements was annealed for 53 seconds in N2-5% H2, dew point +5°C atmosphere, temperature 800°C, cooled, and then examined using a transmission electron microscope. The observed cross section is illustrated. During the entire heating time, the atmosphere was maintained the same, and during cooling, the dew point temperature was maintained at -40°C so that Fe was not oxidized. In FIG. 2, (a) is a cross section of a steel sheet annealed without Fe plating, and (b) is a cross section of a steel sheet annealed after electroplating so that the amount of Fe attached to the cold rolled steel sheet (base iron) is 1.99 g/m2. The oxygen content of the Fe plating layer was 6.3% by weight.

As illustrated in (a) of FIG. 2, it may be seen that fine Mn and Si oxides are observed from the surface layer of the steel sheet annealed at the dew point +5°C without Fe plating, and thick grain boundary oxides are formed inside the base iron. This is because grain boundary oxides begin to form from the stage in which the cold-rolled tissue recovers and recrystallizes into fine crystal grains in the process of temperature rise, and as the annealing temperature rises and the annealing time increases, oxygen flows into the inside of the steel whose grains are coarsened, leading to grain boundaries. This is because oxides in this form, the concentrations of Mn and Si elements gradually change in the GDS profile, so that the maximum and minimum points do not appear properly, or even if they appear, the difference in converted concentration does not satisfy the range limited by the present disclosure.

As illustrated in (b) of FIG. 2, when the Fe plating layer containing 5 to 50% by weight of oxygen is plated so that the iron deposition amount is 1.99 g / m2 and then annealed, oxide is barely generated in the Fe plating layer region, and Fe Oxides in the form of particles are generated at the interface between the plating layer and the base iron and inside the base iron, and these oxides act as nuclei of internal oxides, and linear oxides grow in a direction perpendicular to the surface of the steel sheet. However, the inner oxide formation depth is deeper when the Fe plating layer is not formed than when the Fe plating layer is formed. In this case, the Fe plating layer (surface layer) contains a small amount of Mn and Si elements, and may have a depletion layer in which the Mn and Si contents in a region deeper than the maximum value are greatly reduced as well as illustrating maximum values at the interface.

On the other hand, when annealing is performed in a high dew point atmosphere without Fe plating, oxide is generated at the grain boundary of the microrecrystallized structure from the surface of the base iron to suppress crystal growth, resulting in irregular microcrystalline grains surrounded by microoxides. After forming a high plating layer, when annealed at a high dew point of -15°C to +30°C, the Fe plating layer does not contain oxidizing alloy elements such as Mn and Si, so no oxide is generated at the grain boundary of the plating layer, and the Fe plating layer and the substrate Since oxide is generated at the iron interface, the structure of the Fe plating layer having a uniform thickness and the crystal grains inside the base iron are distinguished. However, depending on the dew point in the annealing furnace, the elongation rate of the base iron, and the steel composition, there are cases where the boundary between the Fe plating layer and the base iron does not appear clearly. Even if it is controlled by C, it does not necessarily have the same characteristics as in (b) of FIG. 2.

Unlike the oxidation-reduction method, the internal oxidation method at annealing does not form a layered oxide layer, so it exhibits excellent characteristics in improving plating adhesion during hot-dip galvanization of ultra-high strength steel sheets containing a large amount of alloying elements such as Mn and Si. Since water vapor inevitably first oxidizes the surface of the steel sheet and then oxygen penetrates into the inside, the surface oxide cannot be fundamentally removed.

In order to solve the above problems, the inventors of the present inventors form an Fe plating layer containing a large amount of oxygen through many experiments and then annealing in a high dew point atmosphere, oxygen from water vapor in the annealing furnace on the surface of the Fe plating layer It was found that the diffusion of oxygen contained in the Fe plating layer to the surface by internal oxidation of alloy elements such as Mn and Si in the base iron may be effectively suppressed even without the formation of surface oxides of elements. Oxygen introduced into the steel due to the high dew point in the annealing furnace additionally oxidizes alloying elements, so surface oxides of alloying elements are barely generated on the steel surface, which dramatically improves the surface quality and coating adhesion of hot-dip galvanized steel sheets., Even when manufacturing alloyed hot-dip galvanized steel sheet, it is possible to obtain a uniform hot-dip galvanized steel sheet without surface defects by accelerating the alloying reaction.

More specifically, an Fe plating layer containing 5 to 50% by weight of oxygen is formed on a cold-rolled steel sheet (base iron), and the mechanical properties of the steel sheet may be secured in an annealing furnace controlled at a dew point of -15°C to +30°C When the temperature is raised to a temperature of 600 to 950°C and then cooled again to perform hot-dip plating, non-plating is suppressed and a hot-dip galvanized steel sheet having excellent coating adhesion may be obtained.

In one embodiment of the present disclosure, the Fe plating layer may be formed through a continuous plating process, and at this time, the Fe coating weight may be 0.5 to 3.0 g/m2 based on the Fe adhesion amount. When the Fe plating amount is less than 0.5 g/m 2, the effect of suppressing the diffusion of alloying elements by the Fe plating layer may be insufficient in a typical continuous annealing process. In addition, even if it exceeds 3.0 g / m2, the suppression effect of the alloying element may be further increased, but a plurality of plating cells must be operated to secure a high coating amount, and in the case of using an insoluble anode, the electroplating solution is rapidly acidified, the plating efficiency is lowered, and sludge is generated, which is not economical. In another embodiment of the present disclosure, the Fe coating weight may be 1.0 to 2.0 g/m 2. When internal oxidation is performed after forming the Fe plating layer, internal oxide is formed at or directly below the interface between the Fe plating layer and the base iron. The peaks of Mn and Si concentrations exist in the range of 0.05 to 1.0 µm. The Fe coating weight of 0.5 to 3.0 g/m2 of the present disclosure may correspond to a thickness of 0.05 to 0.4 µm after annealing.

In addition, in the Fe plating layer having the above-described high oxygen concentration, by controlling the temperature, dew point temperature and atmosphere of the subsequent annealing process, maximum points and minimum points are formed in the GDS concentration profile of Mn and Si elements inside the galvanized steel sheet, and the reduced concentration at the maximum point and the reduced concentration at the minimum point may satisfy the numerical range limited in one embodiment of the present disclosure. Considering this point, in one embodiment of the present disclosure, the oxygen concentration in the Fe plating layer may be 5 to 50% by weight, and in another embodiment, it may be 10 to 40% by weight. In order to obtain the surface oxide suppression effect, the amount of oxygen in the Fe plating layer must be sufficiently high. Even if the oxygen concentration in the Fe plating layer is less than 5% by weight, the surface oxide suppression effect may be obtained by increasing the amount of Fe coating. In addition, when the oxygen content is less than 5% by weight, it is difficult to sequentially form a maximum point and a minimum point in the GDS profile of Mn and Si. control over On the other hand, since the oxygen concentration in the Fe plating layer may increase, the surface oxide suppression effect during annealing may further increase, but the upper limit is limited to 50 wt% because it is difficult to obtain a plating layer exceeding 50 wt% by conventional electroplating In another embodiment of the present disclosure, the oxygen concentration in the Fe plating layer may be limited to 10 to 40%.

In one embodiment of the present disclosure, the annealing temperature may be 600°C to 950°C based on the steel sheet temperature of the soak zone. If the annealing temperature is too low, the structure of the cold-rolled steel sheet is not properly recovered and recrystallized, making it difficult to secure mechanical properties such as strength and elongation of the steel sheet. The quality of galvanizing is poor, and it is not economical because it is operated at a high temperature unnecessarily.

On the other hand, in one embodiment of the present disclosure, the dew point inside the annealing furnace may be -15°C to +30°C. When the dew point is less than -15°C, the amount of oxygen flowing into the steel decreases and only the surface oxidation is increased, and internal oxidation does not occur. Therefore, a large amount of oxide is present on the surface, resulting in poor hot-dip galvanizing quality. In addition, even if the dew point exceeds +30°C, internal oxidation increases and the effect of suppressing surface oxidation by suppressing the diffusion of alloying elements further increases. If the cooled water vapor is condensed and applied for a long time in continuous annealing, equipment problems may occur. The dew point may be managed in the above-described range at 600 to 950°C, and may be managed under more relaxed conditions in a lower temperature range. In another embodiment of the present disclosure, the dew point may be limited to -10 to +20°C.

In addition, in order to prevent oxidation of the base iron and the Fe plating layer during annealing, the hydrogen concentration in the atmosphere gas during annealing may be set to 1% or more in terms of volume%. When the hydrogen concentration is less than 1%, a small amount of oxygen inevitably included in the H2 and N2 gas cannot be effectively removed through an oxidation reaction, and the oxygen partial pressure increases, which may cause surface oxidation of the ferrous metal. On the other hand, if the hydrogen concentration exceeds 70%, the risk of explosion in case of gas leakage and the cost of high hydrogen work increase, so the hydrogen concentration may be set to 70% or less. Other than the hydrogen (H2), it may be substantially nitrogen (N2) except for impurity gases that are inevitably included.

Moreover, according to one embodiment of the present disclosure, the holding time after reaching the target temperature during annealing may be limited to 5 to 120 seconds. During annealing, it is necessary to maintain the annealing target temperature for 5 seconds or more in order to sufficiently transfer heat to the inside of the base steel to obtain uniform mechanical properties in the thickness direction. On the other hand, if the high-temperature annealing holding time is excessively long, the diffusion of alloying interfering elements through the Fe plating layer increases, increasing the amount of surface oxide production, and as a result, the hot-dip galvanizing quality deteriorates, so it may be limited to 120 seconds or less.

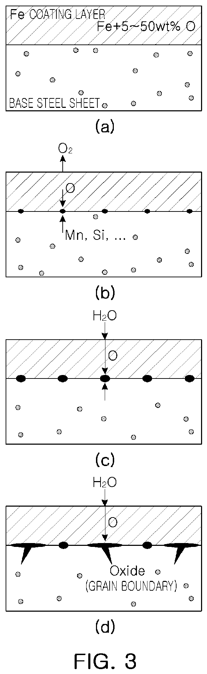

Hereinafter, the effect of suppressing surface diffusion of Mn and Si during annealing of a cold-rolled steel sheet having a Fe plating layer containing a large amount of oxygen based on the above description in a high dew point atmosphere will be described in detail with reference to FIG. 3.

FIG. 3 schematically illustrates phenomena occurring inside the steel sheet as the temperature of the steel sheet is raised according to the conditions of the present disclosure. 3(a) illustrates a schematic cross-sectional view of a base iron having an Fe plating layer containing a large amount of oxygen. The base iron contains alloy elements such as Mn and Si, and the Fe plating layer contains 5 to 50% by weight of oxygen and impurities inevitably mixed during electroplating, and the balance is composed of Fe.

3(b) illustrates a state in which the Fe-plated cold-rolled steel sheet is heated to about 300 to 500°C in a nitrogen atmosphere containing 1 to 70% H2. The surface of the Fe plating layer containing a large amount of oxygen is gradually reduced and oxygen is removed, but at the interface between the Fe plating layer and the base iron, Mn and Si diffused from the base iron combine with oxygen in the Fe plating layer to form internal oxides, and diffusion is inhibited. In addition, as the temperature increases, as Mn and Si diffused inside the base iron accumulate, the internal oxide at the interface gradually grows. Even though the dew point in the annealing furnace varies widely from -90°C to +30°C in the low-temperature region of the temperature rising stage, a large amount of oxygen exists in the Fe plating layer than the rate at which oxygen dissociated from water vapor diffuses into the steel due to the low temperature, the Fe plating layer is reduced and the rate at which oxygen is released is faster, so even if the dew point changes in the annealing furnace, it is not greatly affected in the low temperature section. Therefore, dew point control is not a very important factor at this stage.

However, the amount of oxygen inside the Fe plating layer plays an important role, and when a lot of fine internal oxides are generated at the interface between the Fe plating layer and the base iron and inside the base iron in the low temperature step, the alloying elements inside the base iron act as oxide nuclei that may continuously become internally oxidized. In order to generate these oxide nuclei, the concentration of oxygen and alloy elements must be high at the same time. If enough oxygen is included in the Fe plating layer, a large amount of oxide nuclei are generated near the interface between the Fe plating layer having a high oxygen concentration and the base iron having a high alloying element concentration. However, if almost no oxygen is included in the Fe plating layer, alloying elements included in the base iron pass through the Fe plating layer to form oxides on the surface. Afterwards, when the temperature is raised, the oxygen in the Fe plating layer is further depleted, and the diffusion of alloying elements in the base iron is further increased, so the formation of surface oxides increases.

Figure 3 (c) illustrates a cross-sectional schematic of the base iron when the temperature is raised to 500 ∼ 700°C in the same reducing atmosphere. During the heating process, it is recommended to control the dew point inside the annealing furnace to -15°C to +30°C. When the temperature rises, the Fe plating layer is sufficiently reduced and the oxygen concentration is lowered, so the oxygen release rate slows down, while the water vapor in the annealing furnace dissociates and the diffusion rate into the steel greatly increases. Therefore, if the dew point is raised from 500 to 700°C, which is lower than the temperature at which the Fe plating layer is completely reduced, diffusion of Mn and Si inside the steel to the surface through the Fe plating layer may be effectively suppressed.

FIG. 3(d) illustrates a schematic cross-sectional view of the steel sheet after maintaining the dew point at a high temperature in the range of 600 to 950°C while adjusting the dew point to -15°C to +30°C. Inside the base iron, Mn and Si are continuously diffused, and on the surface of the steel sheet, oxygen supplied from water vapor quickly penetrates and is supplied, so Mn and Si are oxidized inside. Mn and Si oxides in the form of particles generated by reacting with oxygen act as nuclei in which oxides may grow, so the inner oxides grow concentrated on the interface between the Fe plating layer and the base iron. In addition, since the diffusion rate of oxygen is faster than that of Mn and Si, which have a large atomic size, internal oxides are formed deeply not only at grain boundaries but also inside grains.

Above, the control conditions for each temperature have been described, but the most important step in the annealing process is to maintain the steel sheet temperature at 600 to 950°C. Distribution may be effectively controlled. Of course, this dew point control is not particularly problematic even if it is performed in all processes prior to the maintaining step. In addition, it is worth noting that the above-described process is only to explain and illustrate one embodiment of the present disclosure, and that the reaction mechanism of the present disclosure is not always constrained to the above description.

After the annealing step, the annealed steel sheet may be cooled. Since the cooling conditions in the cooling step after the annealing step do not significantly affect the surface quality of the final product, that is, the plating quality, there is no need to specifically limit the cooling conditions in the present disclosure. However, in order to prevent oxidation of the iron component during the cooling process, a reducing atmosphere may be applied to at least iron.

According to one embodiment of the present disclosure, a hot-dip galvanized layer may be formed by performing hot-dip galvanizing on the steel sheet for plating obtained by the above-described process. In the present disclosure, the hot-dip galvanizing method is not particularly limited.

In addition, in the present disclosure, since any base iron having the above-described alloy composition may be applied without limitation as a base iron for plating steel sheet or hot-dip galvanized steel sheet according to the present disclosure, the method of manufacturing base iron may not be specifically limited.

In one embodiment of the present disclosure, the Fe plating layer may be formed on the surface of the base iron through an electroplating method, and the oxygen concentration of the Fe plating layer formed may be controlled by appropriately controlling the conditions of the electroplating solution and the plating conditions.

That is, in order to form the Fe plating layer in the present disclosure, iron ions including ferrous ions and ferric ions; complexing agent; and unavoidable impurities, and the concentration of ferric ions among the iron ions is 5 to 60% by weight. An electroplating solution may be used.

According to one embodiment of the present disclosure, the electroplating solution contains ferrous ions and ferric ions. In order to obtain high plating efficiency, it may be advantageous to include only ferrous ions. However, if only ferrous ions are included, the solution deteriorates and the plating efficiency rapidly decreases, which may cause quality deviation in the continuous electroplating process. The ferric ion may be further included. At this time, the concentration of the ferric ions is preferably 5 to 60% by weight, more preferably 5 to 40% by weight of the total amount of ferrous and ferric ions. If it is less than 5%, the rate at which ferric iron is reduced to ferrous iron at the cathode is smaller than the rate at which ferrous iron is oxidized to ferric at the anode, so that the concentration of ferric iron rises rapidly and the pH drops rapidly, resulting in a decrease in plating efficiency. continuously deteriorate On the other hand, when the concentration of ferric ions exceeds 60%, the amount of reaction in which ferric iron is reduced to ferrous iron at the cathode increases more than the amount of reaction in which ferrous iron is reduced and precipitated as metallic iron, so the plating efficiency is greatly reduced and the plating quality deteriorates. Therefore, in consideration of equipment and process characteristics such as plating amount, working current density, solution replenishment amount, amount of solution lost on the strip, and concentration change rate due to evaporation, the concentration of ferric ions among the iron ions is 5 to 60% by weight desirably.

The iron ion concentration is preferably 1 to 80 g per 1 L of the electroplating solution, and more preferably 10 to 50 g per 1 L. If it is less than 1 g / L, there is a problem that plating efficiency and plating quality are rapidly deteriorated, whereas if it exceeds 80 g / L, solubility may be exceeded and precipitation may occur, and it is not economical because the loss of raw materials due to the loss of solution increases in the continuous plating process.

The electroplating solution of the present disclosure includes a complexing agent, and it is preferable to use an amino acid or an amino acid polymer as the complexing agent in order to maintain a high plating efficiency without generating sludge while containing a large amount of ferric iron.

Amino acid refers to an organic molecule in which a carboxyl group (-COOH) and an amine group (-NH2) are bonded, and an amino acid polymer refers to an organic molecule formed by polymerization of two or more amino acids, and an amino acid polymer has similar complexing properties to amino acids. Therefore, in the following description, amino acids and amino acid polymers are collectively referred to as amino acids.

When amino acids are dissolved in neutral water, amines combine with hydrogen ions to have positive charges, and carboxyl groups have negative charges when hydrogen ions dissociate, so amino acid molecules maintain charge neutrality. On the other hand, when the solution is acidified, the carboxyl group recombines with the hydrogen ion to become charge neutral, and since the amine has a positive charge, the amino acid molecule forms a cation. That is, amino acids form charge neutral or positive ions in slightly acidic aqueous solutions.

When amino acids are added to an acidic electrolyte containing iron ions, they are complexed with ferrous and ferric ions, and the iron ions complexed with amino acids maintain a positive ion state even in a complexed state. Therefore, a common complexing agent having a plurality of carboxyl groups exhibits characteristics electrically opposite to those of having a negative charge in a weakly acidic aqueous solution.

In addition, compared to complexing agents containing a plurality of carboxyl groups such as citric acid and EDTA, amino acids form fewer bonds with iron ions and have weak bonding strength, but their bonding strength with ferric ions that generate sludge is sufficiently strong. Precipitation by ions may be prevented. In addition, since ferric ions may maintain positive ions even when complexed, ferric ions are easily transferred to the negative electrode and reduced to ferrous ions to participate in the plating reaction, whereas movement to the positive electrode is inhibited, resulting in ferric iron Since the rate of generation of ions slows down, even if continuous plating is performed for a long period of time, the concentration of ferric ions is maintained at a certain level, the plating efficiency is maintained constant, and there is no need to replace the electrolyte solution.

On the other hand, in the continuous electroplating process, when the iron ions in the solution are consumed by plating, the solution is acidified. Even if the same amount of iron ions are precipitated, the solution containing ferric ions has a higher pH than the solution containing only ferrous ions, and change will decrease. When the pH increases, some ferric ions combine with hydroxyl ions, and when the pH decreases, hydroxyl ions are separated and neutralized, so the solution containing ferric ions slows down the pH change even without a separate pH buffer, acting as a pH buffer. Therefore, it is possible to keep the electroplating efficiency constant in the continuous electroplating process.

Therefore, sludge may be prevented by using amino acids as a complexing agent, ferric ions as well as ferrous ions may be used as plating raw materials, and when ferrous ions and ferric ions are mixed and used, a solution Since it slows down the pH change and easily prevents the accumulation of ferric ions, it is possible to keep the electroplating efficiency and plating quality constant in the continuous electroplating process.

On the other hand, the complexing agent is added in an amount such that the molar concentration ratio of the iron ion and the complexing agent is 1: 0.05 to 2.0, more preferably 1: 0.5 to 1.0. If it is less than 0.05, the excessive ferric ions combine with hydroxyl ions or oxygen to prevent sludge formation, and even if ferric iron is not included, the plating efficiency is greatly reduced, and furthermore, burning is caused, resulting in poor plating quality, and it gets worse. On the other hand, even if it exceeds 2.0, the sludge suppression effect and plating quality are maintained, but the overvoltage rises, resulting in a decrease in plating efficiency. It is not economical because the cost increases.

The complexing agent is preferably one or more selected from amino acids or amino acid polymers, and may be, for example, one or more selected from alanine, glycine, serine, threonine, arginine, glutamine, glutamic acid, and glycylglycine.

When electroplating is performed at a current density of 3 to 120 A/dm2 while maintaining a solution temperature of 80°C or less and a pH of 2.0 to 5.0 using the amino acid as a complexing agent, an Fe plating layer with high plating efficiency and high oxygen concentration may be obtained.

The temperature of the Fe electroplating solution does not greatly affect the quality of the Fe plating layer, but when it exceeds 80°C, the evaporation of the solution becomes extreme and the concentration of the solution continuously changes, making uniform electroplating difficult.

If the pH of the Fe electroplating solution is less than 2.0, the electroplating efficiency is lowered and is not suitable for the continuous plating process. If the pH exceeds 5.0, the plating efficiency increases, but during continuous electroplating, sludge in which iron hydroxide is precipitated is generated. This causes clogging of pipes, contamination of rolls and equipment.

When the current density is less than 3A/dm2, the plating overvoltage of the cathode decreases and the Fe electroplating efficiency decreases, so it is not suitable for continuous plating process. When the current density exceeds 120A/dm2, burning occurs on the plated surface and the electroplating layer is non-uniform, and the Fe plating layer easily falls off.

As described above, the present disclosure preferably contains 5 to 50% by weight of oxygen in the Fe plating layer. The causes of mixing of oxygen in the Fe plating layer are as follows. In the process of depositing iron on the surface of the steel sheet to which the cathode is applied, hydrogen ions are reduced to hydrogen gas at the same time, and the pH rises. Therefore, both ferrous and ferric ions temporarily bond with OH- ions and may be incorporated together when the Fe plating layer is formed. If an anionic complexing agent such as acetic acid, lactic acid, citric acid, or EDTA is used, iron ions combined with OH- ions of the complexing agent become negatively charged on average, and when a cathode is applied for electroplating, an electrical repulsive force is generated and the mixing of Fe into the plating layer is suppressed. On the other hand, amino acids are electrically neutral at pH 2.0 to 5.0, and exhibit positive ions in strong acids below pH 2.0. Even when 1 or 2 OH- bonds to iron ions bonded to amino acids, they become electrically neutral, resulting in negative ions for electroplating. Oxygen is mixed in a large amount due to the occurrence of electric attraction. Therefore, when Fe electroplating is performed by using amino acids as a complexing agent so that the molar concentration ratio of iron ions and amino acids is 1:0.05 to 1:2.0 and maintaining pH 2.0 to 5.0, plating efficiency is high and sludge generation is suppressed However, an Fe plating layer containing 5 to 50% by weight of oxygen may be obtained.

In order to secure the hot-dip galvanizing quality of the steel sheet containing Mn and Si, it is preferable to treat the coating amount of the Fe plating layer at 0.5 to 3.0 g/m2 based on the amount of iron. The upper limit of the Fe coating amount is not particularly limited, but if it exceeds 3.0 g/m 2 in a continuous plating process, it is not economical because a plurality of plating cells are required or the production rate is lowered. In addition, when the Fe electroplating amount is large, the Fe electroplating solution is rapidly denatured in a continuous process, and the pH decreases and the plating efficiency is greatly reduced, making it difficult to manage the solution. On the other hand, if the Fe electroplating amount is less than 0.5 g/m2, oxygen contained in the Fe plating layer is quickly reduced and removed, so that the diffusion of Mn and Si from the base iron and the formation of surface oxides cannot be effectively suppressed, resulting in poor hot-dip plating quality. There is a problem with this degradation. The Fe plating amount is the iron concentration contained in the plating layer and has a thickness of about 0.05 to 0.4 µm when the Fe plating layer is completely reduced during annealing.

### Mode for Invention

Hereinafter, the present disclosure will be described in more detail through examples. However, it should be noted that the following examples are only for exemplifying and specifying the present disclosure, and are not intended to limit the scope of the present disclosure. This is because the scope of the rights of the present disclosure is determined by the matters described in the claims and the matters reasonably inferred therefrom.

### (Example)

First, one type of iron was prepared as illustrated in Table 1 below. The base iron was a cold-rolled steel sheet, and no special plating layer was formed on the surface.

**[Table 1]**

| Comp onen t | Mn | Si | C | Al | Ti | P | S | B | Mo | Cr | Fe |
|---|---|---|---|---|---|---|---|---|---|---|---|
| Conc entr atio n | 2.68 | 1.46 | 0.17 | 0.046 | 0.024 | 0.021 | 0.005 | 0.002 2 | 0.06 | 0.5 | Bala nce |

Prior to performing Fe electroplating on the steel sheet, after Fe electroplating was performed using a Cu plate, the total amount of Fe was measured by dissolving in a 5 to 10% by weight hydrochloric acid solution to measure the amount of electroplating and plating efficiency in advance. Referring to the measured plating efficiency, by performing Fe electroplating on the cold-rolled steel sheet, the Fe electroplating amount was similarly adjusted even if the plating solution and plating conditions were changed. Fe electroplating was additionally performed on the Cu plate under each solution and plating condition, and the total amount of Fe and O was obtained through GDS analysis, and the average oxygen concentration of the Fe plating layer according to each electroplating condition was measured, was measured separately and is illustrated in Table 2. During plating, the temperature of all plating solutions was adjusted to 50°C. On the other hand, the Fe plating layer was formed on several cold-rolled steel sheets having the composition illustrated in Table 1 under the same conditions as the solution and plating conditions for electroplating Cu, and then the following conditions Annealing and hot-dip galvanizing were performed.

The inside of the annealing furnace maintained a reducing atmosphere with a N2 gas atmosphere containing 5% H2 in all sections, and the dew point was maintained at - 18°C to +5°C only until the temperature elevation section and cracking section, as illustrated in Table 2,, from the cooling section, it was maintained at -40°C, a reducing atmosphere for iron. Here, a cold-rolled steel sheet electroplated with Fe is charged according to the above-described process (i.e., conditions in Table 2, plating bath temperature: 50°C), heated to 850°C at a heating rate of about 2.5°C/sec, and then heated to 53°C, held for seconds. After that, it was slowly cooled to 650°C at a rate of 2.8°C/sec and rapidly cooled again to 400°C at a rate of 14.5°C and stopped. When the cooling was completed, the temperature was raised again to 480°C so that hot-dip galvanizing was possible and introduced into the hot-dip galvanizing bath. The hot-dip galvanizing bath contained 0.20 to 0.25% of Al, the temperature was maintained at 460°C, and after plating, it was slowly cooled to room temperature to prepare a hot-dip galvanized steel sheet.

The plating properties of the manufactured hot dip galvanized steel sheets were evaluated, the GDS concentration profile was measured for the base iron in which the plating layer was dissolved with about 8% hydrochloric acid solution, and the average concentrations were measured at the maximum and minimum points of Mn and Si and at 5 µm inside the base iron, respectively, and the results are illustrated in Table 3.

Coating properties of the hot-dip galvanized steel sheet were visually evaluated. If there is no non-plating over the entire area, it is indicated as 'good,' and if fine dotted non-plating within 1 mm occurs, it is classified as 'dot unplating,' and linear non-plating or dot-shaped non-plating is linear or clustered. Therefore, if several defects occurred at the same time, it was marked as 'linear defect,' and if non-plating occurred in a large area of 5 mm or more in diameter, it was classified as 'non-plating.' Plating defects tend to illustrate large proportions of unplated areas in the order of 'non-plating,' 'linear defects,' 'dot non-plating,' and 'good.'

To evaluate plating adhesion, automotive structural sealer was applied to a thickness of about 5 mm on the hot-dip galvanized steel sheet and cured at a temperature of 150 to 170°C. The hot-dip galvanized steel sheet cooled to room temperature was bent at 90 degrees to remove the sealer. If the plating layer adheres to the sealer and peels off at the entire interface between zinc plating and base iron, the plating adhesion is judged to be poor and marked as 'peeling,' and when the plating layer does not peel off, the plating adhesion is judged to be 'good' did In some specimens, only a part of the plating layer was peeled off, and in this case, it was marked as 'partial peeling.' However, the plating adhesion was not evaluated for the specimens in which 'unplating' occurred.

The concentration profile of the ferrous iron having the plating layer removed with hydrochloric acid was obtained according to the above-described GDS analysis method, and after removing noise by applying a 100 nm Gaussian filter, maximum points and minimum points were calculated. In some GDS profiles, maxima or minima could not be calculated, and in these cases, it was marked as 'ND.' However, even if it is not indicated in the case of the minimum point, when calculating the difference of converted concentration, it was introduced into the calculation by considering it to be the same as the concentration of Mn and Si inside the base material described below. However, when the maximum point was not formed, the converted concentration could not be obtained, and it was considered to be out of the scope of the present disclosure.

As the concentrations of Mn and Si inside the base material, the values measured at 5 µm in the depth direction from the steel plate surface (the interface between the galvanized layer and the steel plate) were used.

**[Table 2]**

| Divisi on | iron conc entr atio n (g/L ) | Ferric iron concen tratio n (g/L) | Compl exing agent type | Complexi ng agent/ir on molarity ratio | Curre nt densi ty (A/dm² ) | pH | Fe electrop lating amount (g/m²) | Oxygen concent ration in Fe plating layer (wt%) | dew point in annea ling furna ce (°C) |
|---|---|---|---|---|---|---|---|---|---|
| Compar ative Exampl e 1 | | | | | | | 0 | | -15°C |
| Compar ative Exampl e 2 | | | | | | | 0 | | +5°C |
| Compar ative Exampl e 3 | 50.1 | 4.2 | Citri c acid | 0.2 | 40 | 3.2 0 | 0.42 | 4.6 | -15°C |
| Compar ative Exampl e 4 | 50.1 | 4.2 | Citri c acid | 0.2 | 40 | 3.2 0 | 0.81 | 3.3 | -15°C |
| Compar ative Exampl e 5 | 50.1 | 4.2 | Citri c acid | 0.2 | 40 | 3.2 0 | 1.21 | 4.9 | -15°C |
| Compar ative Exampl e 6 | 50.1 | 4.2 | Citri c acid | 0.2 | 40 | 3.2 0 | 1.99 | 4.3 | -15°C |
| Compar ative Exampl e 7 | 50.1 | 4.2 | Citri c acid | 0.2 | 40 | 3.2 0 | 2.99 | 4.3 | -15°C |
| Compar ative Exampl e 8 | 50.1 | 4.2 | Citri c acid | 0.2 | 40 | 3.2 0 | 0.42 | 4.6 | +5°C |
| Compar ative Exampl e 9 | 50.1 | 4.2 | Citri c acid | 0.2 | 40 | 3.2 0 | 0.81 | 3.3 | +5°C |
| Compar ative Exampl e 10 | 50.1 | 4.2 | Citri c acid | 0.2 | 40 | 3.2 0 | 1.21 | 4.9 | +5°C |
| Compar ative Exampl e 11 | 50.1 | 4.2 | Citri c acid | 0.2 | 40 | 3.2 0 | 1.99 | 4.3 | +5°C |
| Compar ative Exampl e 12 | 50.1 | 4.2 | Citri c acid | 0.2 | 40 | 3.2 0 | 2.99 | 4.3 | +5°C |
| Compar ative Exampl e 13 | 49.2 | 4.8 | Glyci ne | 0.5 | 20 | 3.0 0 | 0.40 | 10.3 | -18°C |
| Compar ative Exampl e 14 | 49.2 | 4.8 | Glyci ne | 0.5 | 20 | 3.0 0 | 0.82 | 8.7 | -18°C |
| Compar ative Exampl e 15 | 49.2 | 4.8 | Glyci ne | 0.5 | 20 | 3.0 0 | 1.18 | 9.2 | -18°C |
| Compar ative Exampl e 16 | 49.2 | 4.8 | Glyci ne | 0.5 | 20 | 3.0 0 | 1.99 | 6.3 | -18°C |
| Compar ative Exampl e 17 | 49.2 | 4.8 | Glyci ne | 0.5 | 20 | 3.0 0 | 3.00 | 5.1 | -18°C |
| Compar ative Exampl e 18 | 49.2 | 4.8 | Glyci ne | 0.5 | 20 | 3.0 0 | 0.40 | 10.3 | -15°C |
| Exampl e 1 | 49.2 | 4.8 | Glyci ne | 0.5 | 20 | 3.0 0 | 0.82 | 8.7 | -15°C |
| Exampl e 2 | 49.2 | 4.8 | Glyci ne | 0.5 | 20 | 3.0 0 | 1.18 | 9.2 | -15°C |
| Exampl e 3 | 49.2 | 4.8 | Glyci ne | 0.5 | 20 | 3.0 0 | 1.99 | 6.3 | -15°C |
| Exampl e 4 | 49.2 | 4.8 | Glyci ne | 0.5 | 20 | 3.0 0 | 3.00 | 5.1 | -15°C |
| Compar ative Exampl e 19 | 49.2 | 4.8 | Glyci ne | 0.5 | 20 | 3.0 0 | 0.40 | 10.3 | +5°C |
| Exampl e 5 | 49.2 | 4.8 | Glyci ne | 0.5 | 20 | 3.0 0 | 0.82 | 8.7 | +5°C |
| Exampl e 6 | 49.2 | 4.8 | Glyci ne | 0.5 | 20 | 3.0 0 | 1.18 | 9.2 | +5°C |
| Exampl e 7 | 49.2 | 4.8 | Glyci ne | 0.5 | 20 | 3.0 0 | 1.99 | 6.3 | +5°C |
| Exampl e 8 | 49.2 | 4.8 | Glyci ne | 0.5 | 20 | 3.0 0 | 3.00 | 5.1 | +5°C |
| Exampl e 9 | 50.7 | 5.1 | Glyci ne | 0.5 | 70 | 2.9 0 | 0.50 | 45.1 | -15°C |
| Exampl e 10 | 50.7 | 5.1 | Glyci ne | 0.5 | 70 | 2.9 0 | 1.01 | 42.7 | -15°C |
| Exampl e 11 | 50.7 | 5.1 | Glyci ne | 0.5 | 70 | 2.9 0 | 2.01 | 39.4 | -15°C |
| Exampl e 12 | 50.7 | 5.1 | Glyci ne | 0.5 | 70 | 2.9 0 | 2.98 | 37.2 | -15°C |
| Exampl e 13 | 50.7 | 5.1 | Glyci ne | 0.5 | 70 | 2.9 0 | 0.50 | 45.1 | +5°C |
| Exampl e 14 | 50.7 | 5.1 | Glyci ne | 0.5 | 70 | 2.9 0 | 1.01 | 42.7 | +5°C |
| Exampl e 15 | 50.7 | 5.1 | Glyci ne | 0.5 | 70 | 2.9 0 | 2.01 | 39.4 | +5°C |
| Exampl e 16 | 50.7 | 5.1 | Glyci ne | 0.5 | 70 | 2.9 0 | 2.98 | 37.2 | +5°C |

**[Table 3]**

| Divisi on | Plating Propert ies | Plating adhesio n | Mn maximu m concen tratio n (wt%) | Mn minimu m concen tratio n (wt%) | Mn concen tratio n inside base materi al (wt%) | Si maximu m concen tratio n (wt%) | Si minimu m concen tratio n (wt%) | Si conce ntrat ion insid e base mater ial (wt%) |
|---|---|---|---|---|---|---|---|---|
| Compar ative Exampl e 1 | Unplate d | - | ND | ND | 2.70 | ND | ND | 1.46 |
| Compar ative Exampl e 2 | Dot unplate d | Partial peeling | 4.15 | 2.43 | 2.69 | 1.74 | 1.30 | 1.44 |
| Compar ative Exampl e 3 | Unplate d | - | ND | ND | 2.67 | ND | ND | 1.45 |
| Compar ative Exampl e 4 | Unplate d | - | ND | ND | 2.67 | ND | ND | 1.44 |
| Compar ative Exampl e 5 | Unplate d | - | 3.55 | 1.67 | 2.66 | 2.07 | ND | 1.44 |
| Compar ative Exampl e 6 | Linear defect | Peeling | 3.18 | 1.26 | 2.70 | 1.67 | 1.13 | 1.47 |
| Compar ative Exampl e 7 | Linear defect | Peeling | 2.82 | 0.78 | 2.68 | 3.24 | 0.87 | 1.45 |
| Compar ative Exampl e 8 | Linear defect | Peeling | 3.96 | 2.26 | 2.69 | 1.57 | 1.13 | 1.48 |
| Compar ative Exampl e 9 | Linear defect | Peeling | 3.88 | 2.10 | 2.66 | 1.55 | 1.09 | 1.44 |
| Compar ative Exampl e 10 | Dot unplate d | Peeling | 3.75 | 1.95 | 2.70 | 1.58 | 1.13 | 1.45 |
| Compar ative Exampl e 11 | Good | Peeling | 3.86 | 1.96 | 2.69 | 1.86 | 1.17 | 1.48 |
| Compar ative Exampl e 12 | Good | Partial peeling | 3.91 | 1.89 | 2.69 | 1.93 | 1.18 | 1.46 |
| Compar ative Exampl e 13 | Linear defect | Peeling | ND | ND | 2.66 | ND | ND | 1.44 |
| Compar ative Exampl e 14 | Linear defect | Peeling | ND | ND | 2.68 | ND | ND | 1.46 |
| Compar ative Exampl e 15 | Linear defect | Peeling | ND | ND | 2.68 | ND | ND | 1.48 |
| Compar ative Exampl e 16 | Good | Peeling | 3.72 | 2.28 | 2.68 | 1.32 | 0.67 | 1.44 |
| Compar ative Exampl e 17 | Good | Partial peeling | 4.04 | 2.02 | 2.68 | 2.25 | 1.23 | 1.47 |
| Compar ative Exampl e 18 | Linear defect | Partial peeling | 4.19 | 2.49 | 2.66 | 2.10 | ND | 1.44 |
| Exampl e 1 | Good | Good | 4.31 | 2.04 | 2.68 | 2.69 | 1.43 | 1.46 |
| Exampl e 2 | Good | Good | 4.64 | 1.64 | 2.68 | 3.13 | 1.32 | 1.48 |
| Exampl e 3 | Good | Good | 5.09 | 1.11 | 2.68 | 3.46 | 1.11 | 1.44 |
| Exampl e 4 | Good | Good | 4.77 | 0.74 | 2.68 | 3.22 | 0.84 | 1.47 |
| Compar ative Exampl e 19 | Good | Partial peeling | 4.21 | 2.26 | 2.67 | 1.68 | 1.03 | 1.47 |
| Exampl e 5 | Good | Good | 5.29 | 1.77 | 2.70 | 2.00 | 1.15 | 1.47 |
| Exampl e 6 | Good | Good | 5.90 | 1.82 | 2.68 | 2.21 | 1.12 | 1.45 |
| Exampl e 7 | Good | Good | 6.13 | 1.82 | 2.67 | 2.46 | 1.20 | 1.48 |
| Exampl e 8 | Good | Good | 6.60 | 1.42 | 2.68 | 2.50 | 1.16 | 1.44 |
| Exampl e 9 | Good | Good | 5.83 | 2.18 | 2.67 | 2.39 | 1.52 | 1.44 |
| Exampl e 10 | Good | Good | 6.03 | 1.83 | 2.66 | 2.60 | 1.42 | 1.47 |
| Exampl e 11 | Good | Good | 5.93 | 1.39 | 2.68 | 2.48 | 1.16 | 1.46 |
| Exampl e 12 | Good | Good | 6.28 | 0.92 | 2.69 | 2.41 | 0.94 | 1.45 |
| Exampl e 13 | Good | Good | 5.66 | 1.91 | 2.68 | 2.16 | 1.16 | 1.46 |
| Exampl e 14 | Good | Good | 6.18 | 1.91 | 2.66 | 2.47 | 1.24 | 1.47 |
| Exampl e 15 | Good | Good | 6.60 | 1.99 | 2.69 | 2.59 | 1.24 | 1.46 |
| Exampl e 16 | Good | Good | 6.90 | 1.49 | 2.67 | 2.84 | 1.26 | 1.47 |

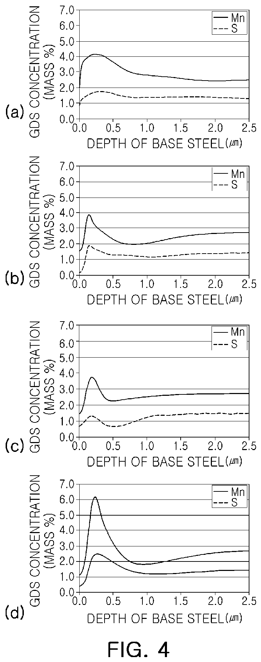

In Comparative Examples 1 and 2, the annealing conditions and hot-dip galvanizing were performed on the base iron without the Fe plating layer under the same conditions as described above. In Comparative Example 1, when Fe electroplating is not performed and annealing is performed by maintaining the dew point in the annealing furnace at -15°C, hot-dip galvanizing is not performed and only surface oxidation occurs, so the concentration of Mn and Si on the surface in the GDS profile The concentration tended to decrease gradually in the high and inside of the steel, and the maximum and minimum points could not be calculated. On the other hand, in Comparative Example 2, the dew point in the annealing furnace was maintained at +5°C, fine dotted unplating portions occurred on the hot-dip galvanized surface, and peeling occurred partially during plating adhesion evaluation. The GDS concentration profile of the iron base of Comparative Example 2 is illustrated in the graph (a) of FIG. 4. In the figure, the solid line is the concentration profile of Mn, and the dotted line is the concentration profile of Si (hereinafter the same). A large amount of internal oxide was generated within 0.5pm of the ferrous metal from the surface and had a maximum point, but the Mn depletion layer occurred at a depth of 2µm from the surface. This is because oxygen continuously flows into the steel during annealing to form grain boundary internal oxidation deep to the inside of the steel, which may also be seen in (a) of FIG. In Comparative Example 2, the difference in the converted concentrations of Mn and Si at the maximum and minimum points was 63.9% and 30.8%, respectively, illustrating insufficient results. Base iron electroplated to have an adhesion weight of 0.42 to 2.99 g/m2 was annealed at the dew point of -15°C and +5°C in an annealing furnace, and hot-dip galvanizing was performed. When iron was electroplated in the Fe electroplating solution containing citric acid as a complexing agent, the concentration of oxygen in the Fe plating layer was as low as less than 5% by weight. Although the dew point of the annealing furnace was adjusted to -15°C and +5, the level of non-plating tended to gradually improve as the amount of Fe electroplating increased, but fine non-plating occurred on most surfaces, and plating Adhesion was poor. In Comparative Example 11, the Fe electroplating amount of 1.99 g / m2, the dew point in the annealing furnace was adjusted to +5°C, and the GDS profile of the hot-dip galvanized base iron is illustrated in FIG. 4 (b). Mn concentration was concentrated at about 0.2 µm in the depth direction directly under the Fe plating layer, but Si was not generated with a high maximum point due to internal oxidation. The difference of concentration between the maximum and minimum points of Mn and Si was 69% and 45%, respectively.

In Comparative Examples 13 to 17, cold-rolled steel sheets electroplated with Fe with an Fe electroplating solution using glycine, a kind of amino acid, as a complexing agent were annealed and hot-dip galvanized while adjusting the dew point in the annealing furnace to -18°C. When the Fe electroplating amount was 1.18 g/m2 or less, fine linear defects were confirmed, and plating adhesion was poor. On the other hand, when the Fe electroplating amount was 1.99 to 2.99 g/m 2, the coating appearance was good, but the adhesion was poor. Although the surface diffusion of Mn and Si was effectively suppressed during the heating process in the annealing furnace due to the high oxygen content in the Fe plating layer, the partial pressure of oxygen in the annealing furnace was insufficient to penetrate into the steel, and the surface oxidation was at a level that could aggravate the surface oxidation. It is judged that the dew point is very low or makes the hot-dip galvanizing quality worse than when it is sufficiently high. The Fe electroplating weight of Comparative Example 16 was 1.99 g/m 2, and the GDS profile of the steel sheet annealed at the dew point of -18°C in the annealing furnace was illustrated in FIG. 4 (c). Although the oxygen of the Fe plating layer effectively forms internal oxidation at the interface between the Fe plating layer and the base iron, due to the oxidizing atmosphere on the surface, the difference between the maximum and minimum concentrations of Mn and Si was 53.7% and 45.1%, respectively, which did not meet the conditions of the present disclosure, and as a result, plating properties deteriorated.

In Comparative Example 18 and Inventive Examples 1 to 4, Fe electroplating was performed under the same conditions as Comparative Examples 13 to 17, the dew point in the annealing furnace was raised to -15°C, and then hot-dip galvanizing was performed after annealing. However, Comparative Example 18 was a case where the amount of Fe coating was small, and as a result, the difference in converted concentration between the maximum and minimum points of Mn and Si was not sufficient, and therefore, plating performance and coating adhesion were not sufficient. In addition, Fe electroplating was performed under the same conditions in Comparative Example 19 and Inventive Examples 5 to 8, and the dew point in the annealing furnace was further increased to +5°C, followed by annealing and hot-dip plating. When the Fe electroplating amount was as low as 0.40 g/m2, the surface condition was improved compared to the case where only internal oxidation was performed, but plating adhesion was poor. However, when the Fe electroplating amount is 0.82g/m2 or more, internal oxidation at the dew point of -15°C and +5°C increases the internal oxidation effect. could get The GDS concentration profile of the base iron for hot-dip galvanizing electroplated in the Fe electroplating solution using glycine as a complexing agent of Inventive Example 7 and annealed while maintaining the dew point in the annealing furnace at +5°C to have an adhesion amount of 1.99 g / m2 It is illustrated in (d) of FIG. Compared to the case where only internal oxidation is performed, the oxygen concentration in the Fe plating layer is low, or the dew point in the annealing furnace is low, an Fe plating layer having a high oxygen concentration is formed and internal oxidation is performed. Since Mn and Si barely diffuse to the surface, the quality of hot-dip galvanizing could be dramatically improved.

In Inventive Examples 9 to 16, Fe electroplating was performed at a high current density of 70 A/dm2 in a Fe electroplating solution containing glycine, and annealing was performed while maintaining the dew point in the annealing furnace at -15°C and +5°C. Hot-dip galvanizing was performed. During Fe electroplating, the concentration of oxygen in the Fe plating layer increased significantly compared to the case of electroplating at 20A/dm2, and the surface of the hot-dip galvanized steel sheet was beautiful and the plating adhesion was good. The internal oxidation of Mn and Si was also well formed in the GDS concentration profile of the ferrous metal. When the Fe plating layer with oxygen concentration higher than 5% by weight is electroplated at 0.5 g/m2 or more and internal oxidation is performed by raising the dew point in the annealing furnace to -15°C or higher, the internal oxidation effect by Fe electroplating and the annealing furnace As the internal oxidation effect increases due to the increase in the dew point, the quality of hot-dip galvanizing of high-strength steel sheet may be dramatically improved.

As described above, it was confirmed that in the case of the inventive examples satisfying all the conditions of the present disclosure, excellent plating properties and plating adhesion were exhibited. Thus, the advantageous effects of the present disclosure could be confirmed.

## Claims

1. A steel sheet **characterized in that**:
GDS profiles of an Mn element and an Si element observed from a surface in a depth direction sequentially include a maximum point and a minimum point,
a difference between a value obtained by dividing an Mn concentration at the maximum point of the GDS profile of the Mn element by an Mn concentration of a base material and a value obtained by dividing an Mn concentration at a minimum point of the GDS profile of the Mn element by the Mn concentration of the base material (a difference of converted concentration of Mn) is 80% or more, and
a difference between a value obtained by dividing an Si concentration at the maximum point of the GDS profile of the Si element by an Si concentration of a base material and a value obtained by dividing an Si concentration at the minimum point of the GDS profile of the Si element by the Si concentration of the base material (a difference of converted concentration of Si) is 50% or more,
wherein when the minimum point does not appear within 5µm depth, a 5µm depth point is a point where the minimum point appears.

2. The steel sheet of claim 1, wherein the steel sheet includes a base iron and an Fe plating layer formed on a surface of the base iron, wherein the surface is a surface of the Fe plating layer.

3. The steel sheet of claim 1, wherein the difference of converted concentration of Mn is 90% or more and the difference of converted concentration of Si is 60% or more.

4. The steel sheet of claim 1, wherein a depth at which the maximum point is formed is 0.05 to 1.0 µm.

5. The steel sheet for plating of one of claims 1 to 4, wherein the base iron contains Mn: 1.0 to 8.0% and Si: 0.3 to 3.0% by weight%.

6. The steel sheet for plating of claim 5, wherein the base iron has a composition containing, by weight%, Mn: 1.0 - 8.0%, Si: 0.3 - 3.0% C: 0.05 - 0.3%, Al: 0.005 - 3.0%, P: 0.04% or less (excluding 0%), S: 0.015% or less (excluding 0%), Cr: 1.5% or less (including 0%), B: 0.005% or less (including 0%), a balance of Fe, and unavoidable impurities.

7. A hot-dip galvanized steel sheet comprising:
the steel sheet for plating of one of claims 1 to 4, and a hot-dip galvanized layer formed on the steel sheet for plating.

8. A method of manufacturing a steel sheet for plating, comprising:
preparing a base iron;
forming an Fe plating layer containing 5 to 50% by weight of oxygen by performing electroplating on the base iron; and
annealing the base iron on which the Fe plating layer is formed by being maintained at 600 to 950°C for 5 to 120 seconds in an annealing furnace with a 1 to 70% H₂-residual N₂ gas atmosphere controlled at a dew point temperature of - 15 to +30°C.

9. The method of manufacturing a steel sheet for plating of claim 8, wherein a deposition amount of the Fe plating layer is 0.5 to 3g/m².

10. The method of manufacturing a steel sheet for plating of claim 8 or 9, wherein the complexing agent is at least one selected from alanine, glycine, serine, threonine, arginine, glutamine, glutamic acid, and glycylglycine.

11. The method of manufacturing a steel sheet for plating of claim 8 or 9, wherein the electroplating solution includes ferrous ions and ferric ions, the ferric ions having a ratio of 5 to 60% by weight relative to a total of iron ions, a total concentration of the iron ions being 1 to 80 g per 1 L of the electroplating solution.

12. The method of manufacturing a steel sheet for plating of claim 8 or 9, wherein the electroplating is performed under conditions of a solution temperature of 80°C or less and a current density of 3 to 120A/dm².

13. A method of manufacturing a hot-dip galvanized steel sheet, comprising:
preparing a base iron;
forming an Fe plating layer containing 5 to 50% by weight of oxygen by performing electroplating on the base iron;
obtaining a steel sheet for plating by annealing by holding at 600 to 950°C for 5 to 120 seconds in an annealing furnace with 1-70% H₂-remaining N₂ gas atmosphere controlled at dew point temperature of -15 to +30°C for the base iron on which the Fe plating layer is formed; and
dipping the steel sheet for plating in a galvanizing bath.
